# EUROPEAN PATENT APPLICATION

(11) **EP 4 488 531 A1**
(43) Date of publication of application: **08.01.2025**
(21) Application number: 22929563.9
(22) Date of filing: 09.10.2022
(51) Int. Cl.: F16B 21/07, F16B 19/02

(54) **FASTENING DEVICE AND FASTENING ASSEMBLY FOR FIXING PARTS**

(30) Priority: 01.03.2022 CN 202210197364
(71) Applicant: Jiaxing Hangong Automobile Fastener Co., Ltd, Jiaxing, Zhejiang 314100 (CN)
(72) Inventor: TAO, Minzhi, Jiaxing, Zhejiang 314100 (CN); TANG, Jingang, Jiaxing, Zhejiang 314100 (CN)
(74) Representative: Meyer-Dulheuer MD Legal Patentanwälte PartG mbB
(86) International application number: PCT/CN2022/123962
(87) International publication number: WO 2023/165133

(57) **Abstract**

A fastener assembly for fixing components includes a fastener and a plug. The fastener includes a body, and two clamping portions. The body includes a connecting portion and two elastic portions. Each of the two elastic portions has an avoidance groove opened thereon. Each of the two clamping portions includes at least one clamping head inserted into the avoidance groove, and an abutment head disposed on a free end of the clamping portion. The plug inclues a pressing portion, and a positioning portion. The positioning portion includes a elastic member, a positioning head, and a plug-in abutting portion. The positioning head includes a connector, a stepped portion, and a locking slot. The plug-in abutting portion includes an elastic connecting portion, and a plug-in hea. The fastener assembly can reduce manufacturing and material costs, and improve competitiveness.

## Description

### RELATED APPLICATION

This present application claims benefit of the PCT Application, PCT/CN2022/123962, filed on October 9, 2022.

### BACKGROUND

### 1. Technical field

The present invention relates to a fastener technology for motor vehicles, and more particularly to a fastener and a fastening assembly for fixing components.

### 2. Description of the related art

In automobile manufacturing, various types of fasteners are used to connect or clamp two or more components together, such as fixing air curtains or airbags to a frame. Moreover, different components or positions require different fasteners.

As the increasing improvement of living standards, cars have gradually become daily means of transportation, and a huge annual production volume of cars and an even greater amount of fasteners used. Therefore, the manufacturing cost and material cost of the fasteners have become important factors to consider, as well as one of the factors that characterize their competitiveness. Of course, while reducing its cost, its quality cannot be lowered.

Therefore, it is necessary to provide a fastener and a fastening assembly for fixing components which makes it possible to meet the above requirements.

### BRIEF DESCRIPTION OF THE DRAWINGS

Many aspects of the embodiments can be better understood with references to the following drawings. The components in the drawings are not necessarily drawn to scale, the emphasis instead being placed upon clearly illustrating the principles of the embodiments. Moreover, in the drawings, like reference numerals designate corresponding parts throughout two views.
FIG.1 is an explosion schematic view of a fastening assembly for fixing components according to the present invention.
FIG.2 is a schematic view of a fastener of the fastening assembly of FIG. 1.
FIG.3 is a schematic view of the fastening assembly for fixing components of FIG.1 in a pre-installed state.
FIG.4 is a schematic view of the fastening assembly for fixing components of FIG.1 after assembly is completed

### DETAILED DESCRIPTION

The present application is illustrated by way of example and not by way of limitaion in the figures of the accompanying drawings. It should be noted that references to "an" or "one" embodiment in this application are not necessarily to the same embodiment, and such references mean at least one.

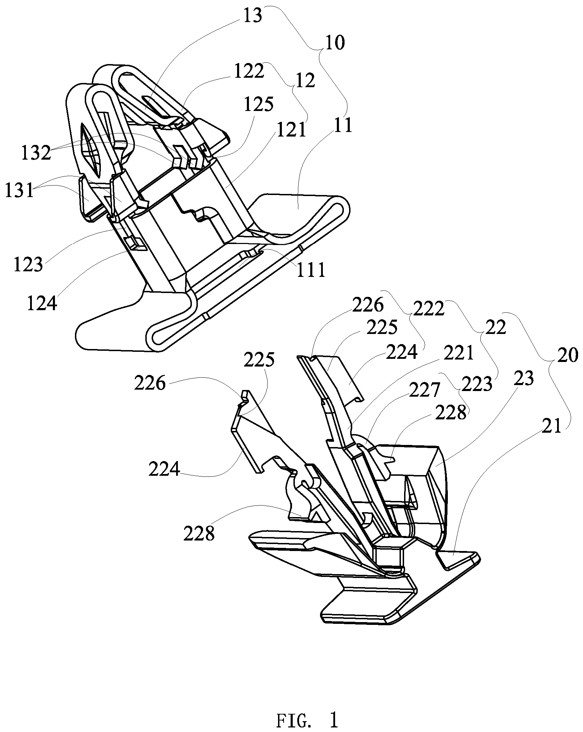

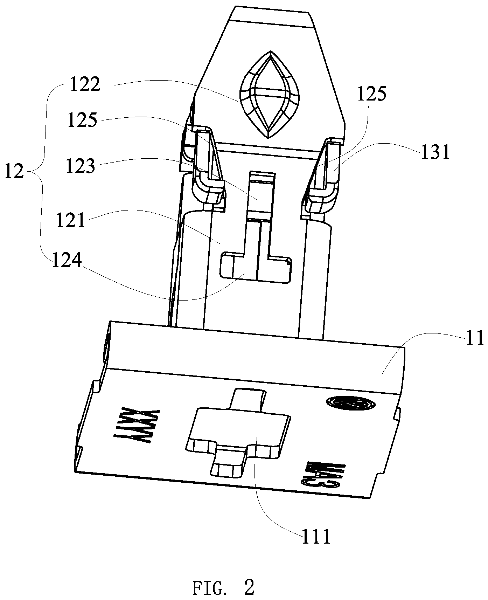

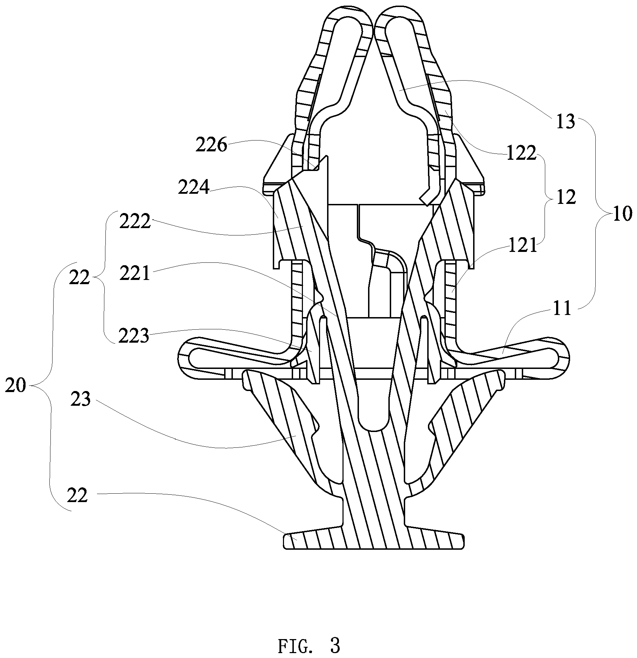

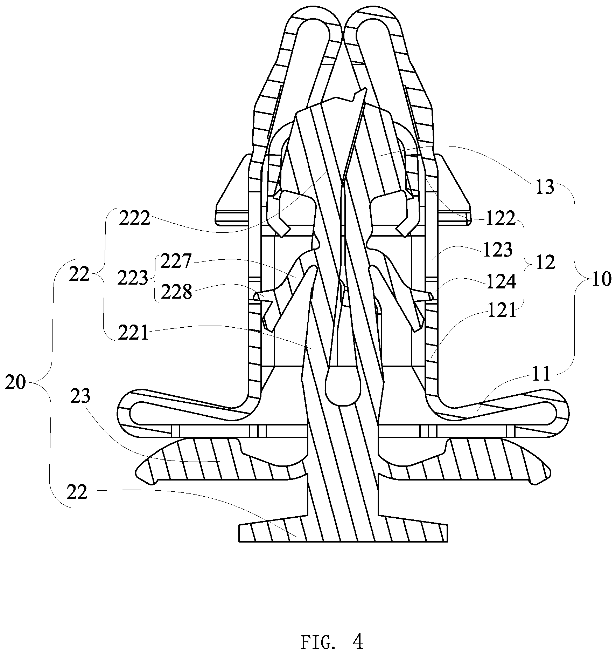

Referring to FIG. 1 to FIG. 4, a fastening assembly for fixing components is shown in accordance with an examplary emobodiment of the present invention. The fastening assembly for fixing components includes a fastener 10 for fixing components, and a plug 20 inserted into the fastener 10. Understandably, the fastening assembly for fixing components can be used to fix air curtains or airbags on a car sheet metal of automobiles, or to fix other components. The air curtains or airbags themselves should be a prior art and will not be further described here.

The fastener 10 includes a head section 11, a body 12 connected to the head section 11, and two clamping portions 13 respectively disposed at one end of the body 12. The fastener 10 can be formed by stamping a single metal plate, thereby reducing the manufacturing process, lowering manufacturing costs, and accelerating manufacturing efficiency.

The head section 11 has a curled structure that curls inward from both ends, so as for forming the body 12. Therefore, the structure of the head section 11 can be designed according to actual requirements. In the present embodiment, the head section 11 is curled into a plate-like structure. The head section 11 is provided with a through-hole 111 thereon. The through-hole 111 is configured for inserting the plug 20, therefore its shape can be set according to the cross-sectional shape of the plug 20, such as square or circular. In the present embodiment, a shape of the through-hole 111 is square.

The body 12 includes a connecting portion 121, two elastic portions 122 spaced apart and extending from the connecting portion 121, two plug holes 123 provided on the connecting portion 121 or the elastic portion 122, and two contact holes 124 connected to the plug holes 123 respectively. The connecting part 121 is made by stamping two free ends of the head section 11, and forms a square cylindrical structure. A hollow part of the square cylindrical structure is in line with the through-hole 111 so as to facilitate the insertion of the plug 20. Of course, the connecting portion 121 may be a circular cylinder. The two elastic portions 122 have the same structure. The two elastic portions 122 are spaced apart and arranged relative to each other, and free ends of the two elastic portions 122 are closed towards each other so as to make the two elastic portions 122 have elasticity. Moreover, the two elastic portions 122 bend at the same angle to make the two elastic portions 122 have same elastic force. At least one avoidance groove 125 is provided on a side of the elastic portion 122. In the present embodiment, two avoidance grooves 125 are respectively provided on two sides of the elastic portion 122. The arrangement direction of the two avoidance grooves 125 is perpendicular to that of the connecting portion 121 and the elastic portion 122. The avoidance groove 125 is configured to cooperate with the clamping portion 13, and it will be explained in detail below. The plug hole 123 can be a rectangular hole, and a length direction of the rectangular hole is parallel to that of the connecting portion 121 and the elastic portion 122. The plug hole 123 is configured to cooperate with the plug20, and it will be explained in detail together with the plug 20 below.

The contact hole 124 is connected to the plug hole 123 and is located on a side facing the head section 11. Positions of the plug hole 123 and the contact hole 124 can be arranged according to actual needs, such as the need to cooperate with the plug 20. The plug hole 123 and the contact hole 124 can be all provided on the elastic portion 122, or all provided on the connection portion 121, or partially provided on the elastic portion 122 and partially provided on the connection portion 121. In the present embodiment, a portion of the plug hole 121 is provided on the elastic portion 122, and another portion thereof is provided on the connecting portion 121. And the contact hole 124 is provided on the connecting portion 121. The two plug holes 123, the two connection portions 121, and the elastic portions 122 are respectively arranged on the two connecting portions 121.

The clamping portions 13 have two, and the two clamping portions 13 have the same structure. Each of the clamping portion 13 extends from a free end of the elastic portion 122. An extension direction of the clamping portion 13 is opposite to that of the free end of the elastic portion 122 so that a main body parts of the clamping portion 13 and the elastic portion 122 overlap with each other. Due to the free ends of the elastic portions 122 being closed towards each other, the two clamping portions 13 are pressed against each other at a connection point with the elastic portion 122 so as to avoid deformation when the connection point of the elastic portion 122 and the clamping portions 13 are inserted into the hole of the car sheet metal and improving deformation strength thereof.

Each of the clamping portions 13 includes at least one clamping head 131 inserted into the avoidance groove 125, and an abutment head 132 provided at a free end of the clamping portions 13. An arrangement position of the clamping head 131 should be able to be inserted into the avoidance groove 125, so it will not be described in detail. One side of the clamping head 131 facing the head section 11 is configured to abut against the air curtain or car sheet metal. In order to increase pressing area and avoid deformation or impale the air curtain or airbag, the clamping head 131 is bent towards a side of the head section 11, that is to say, towards the body 12.

Moreover, In order to facilitate the insertion of the fastener 10 into the hole of the car sheet metal, the clamping head 131 has a wedge-shaped structure along the insertion direction of the fastener 10. Therefore, in order to accommodate the clamping portion 131 which is bent at one end, the avoidance groove 125 has a trapezoidal cross-section. The abutment head 132 is configured to press against the plug 20 so as to fix the plug 20 in a certain position. Therefore, it will be explained in detail below with the plug 20. In order to achieve effective abutment, the abutment head 132 extends away from the elastic portion 122.

The plug 20 is configured to fix the relative position between the fastener 10 and the car sheet metal and the air curtain after the fastener 10 is inserted into the car sheet metal and the air curtain. That is to say, the plug 20 is configured to prevent the fastener 10 from falling out of the car sheet metal or the air curtain. Moreover, the plug 20 is configured to ensure that the clamping portion 13 does not deform or even close, which may cause the clamping head 131 to fall out of the hole in the car sheet metal or the air curtain. The plug 20 can be directly injection molded from materials such as plastic. The plug 20 includes a pressing portion 21, two positioning portions 22 spaced apart and connected to the pressing portion 21, and a limiting portion 23 positioned between the pressing portion 21 and the positioning portion 22. The pressing portion 21 can be a plate-shaped structure so as to be convenient for users to press by hands or tools.

The two positioning portions 22 extend from the pressing portion 21 and are two independent components symmetrically arranged. When the two positioning portions 22 are in a free state, they are in a separated state. The two positioning portions 22 have the same structure, and only one is described in detail as an example to illustrate a structure of the two positioning portions 22. The positioning portion 22 includes an elastic member 221 connected to the pressing portion 21, a positioning head 222 provided at a free end of the elastic member 221, and a plug-in abutting portion 223 provided on the elastic member 221. The elastic member 221 is a rod and extends from the pressing portion 21. The elastic member 221 utilizes its inherent ductility to achieve the purpose of making it have elastic, that is to say, the two positioning portions 22 can be closed or separated.

The positioning head 222 includes a connector 224 for inserting into the plug hole 123, a stepped portion 225 provided on the connector 224, and a locking slot 226 provided on a free end of the connector 224. When the plug 20 and the fastener 10 are in a pre-installed state and the two positioning portion 22 are in free state, the connector 224 is inserted into the plug hole 123, and at the same time, the locking slot 226 is abutted against the abutment head 132 of the clamping portions 13 so as to prevent the plug 20 from being fully inserted into the fastener 10. At this time, the two positioning portions 22 are in a separated state. Therefore, a shape and position of the connector 224 are determined to be able to be inserted into the plug hole 123 when the positioning portion 22 is in a separated state.

The stepped portion 225 is opened on a side wall of the connector 224, and its structure and shape are determined by its function. When the plug 20 is fully inserted into the fastener 10, the connector 224 will detach from the plug hole 123, and at the same time, the two positioning portions 22 will be closed to make the two plug 224 abut against the clamping portion 13 so as to prevent the two clamping portions 13 from flipping and improving the strength of the fastener 10. When the two connectors 224 are abutted against the clamping portions 13, and in order to ensure the strength between the two connectors 224 and also provide position to open the locking slot 226, the stepped portion 225 is provided. Therefore, a position and shape of the stepped portion 225 should be such that the two connectors 224 can be pressed against each other when the two positioning portions 22 are closed.

The plug-in abutting portion 223 is configured to fix a relative position between the plug 20 and the fastener 10 when the plug 20 is fully inserted into the fastener 10. The plug-in abutting portion 223 is arranged between the connector 224 and the pressing portion 21 and includes an elastic connecting portion 227 connected to the elastic member 221, and a plug-in head 228 arranged on the elastic connecting portion 227. An extension direction of the elastic connector portion 227 is inclined towards the head section 11 so as to avoid preventing the plug 20 from being inserted into the fastener 10. The plug-in head 228 is arranged on the elastic connecting portion 227 and extends towards the body 12 so as to form a branching structure with the elastic connecting portion 227. A position of the plug-in head 228 should be such that the plug-in head 228 can be inserted into the contact hole 124 when the plug 20 is fully inserted into the fastener 10. Therefore, a structure and shape of the plug-in head 228 should be the same as that of the contact hole 124.

The limiting portion 23 is configured to restrict a position of the plug 20 inserted into the fastener 10 and is abutted against the head section 11. When the two positioning portion 22 abut against each other and when the plug 20 is pressed towards the free end of the elastic portion 122, the plug-in head 228 is inserted into the contact hole 124 and abut against the contact hole 124 so as to fix the plug 20 and the fastener 10. When the plug-in head 228 is inserted into the contact hole 124, the limiting portion 23 and the plug-in head 228 has a certain elastic recovery force so as to tightly fix the plug 20 in the fastener 10. Therefore, a structure and installation position of the limiting portion 23 should be able to form the above-mentioned rebound force with the plug-in head 228.

When the fastening assembly is used, the fastener 10 and the plug 20 is firstly assembled in the pre-installed state, that is to say, the fastening assembly has not yet been inserted into the hole of the car sheet metal and the air curtain in the pre-installed state for transportation. At this time, the plug 20 is inserted into the through-hole 111 of the head section 11 of the fastener 10, and the connector 224 on the positioning member 222 of the positioning portion 22 is inserted and clamped in the plug hole 123. Moreover, with the help of the elastic force of the elastic member 221, the plug 20 is fixed to the fastener 10 without falling off, which make it easy to use.

When in use, the fastening assembly is inserted into the hole of the car sheet metal and the airbag from the free end of the elastic portion 122, and during the insertion process, the car sheet metal will compress the clamping head 131 of the clamping portion 13 so as to make it shrink back into a space formed by the two elastic portions 122, until the car sheet metal and the airbag are wrapped on the plug hole 121 of the body 12. At this time, the clamping head 131 will return to its original position under the restoring force of the elastic portion 122 so as for clamping the car sheet metal and airbag between the clamping head 131 and the head section 11. Moreover, since the car sheet metal and the airbag is clamped between the clamping head 131 and the head section 11, the connector 224 is pressed out of the plug hole 123, and the abutment head 132 is disengaged from the locking slot 226. Therefore, the entire plug 20 can be inserted into the fastener 10, thereby completing the fixation of the car sheet metal and the airbag. At this time, the plug-in abutting portion 223 is inserted and pressed into the contact hole 124. As a result, a relative position between the plug 20 and the fastener 10 can be fixed. In addition, after the plug 20 is fully inserted into the fastener 10, outer walls of the two connectors 224 are abutted against the clamping portion 13, thereby further preventing its deformation, that is to say, preventing the clamping heads 131 of the two clamping portions 13 from retracting into the space formed by the two elastic portions 122.

As described above, the fastener 10 provided by the present invention for fixing components can be formed by integral stamping of metal materials through structural design, thereby reducing manufacturing and material costs and improving competitiveness. Specifically, the fastener 10 includes the body 12 and the two clamping portions 13, and the clamping portions 13 extend from the free end of the elastic portion 122 of the body 12, and the extension direction of the clamping portions 13 are opposite to that of the free end of the elastic portion 122. Moreover, the free ends of the two elastic portions 122 extend towards each other so that the connecting parts of the two clamping portions 13 and the two elastic portions 122 are pressed against each other, which can provide certain elasticity for the clamping portions 13 so as to contract or expand easily. In addition, since the elastic portion 122 is provided with at least one avoidance groove 125 and the clamping portion 13 includes at least one clamping head 131, the clamping head 131 is inserted into the avoidance groove 125 so as to avoid interference with the components when the fastener 10 is inserted into the car sheet metal and airbag. Moreover, as the clamping head 131 can clamp two components with other structures, it can fix these components and complete the fixation of these components. The fastening assembly includes the plug 20, and the plug 20 has the two positioning portions 22, and each of the two positioning portions 22 has the connector 224, the stepped portion 225, and the locking slot 226. When the fastening assembly is not inserted into the components, the locking slot 226 on the free end of the connector 224 is abutted against the abutment head 132 of the free end of the clamping portion 13, thereby preventing it insert into the components. At this time, it is in the pre-installed state, which is convenient for transportation. When the fastening assembly is fully inserted into the components, the components can make the connector 224 to retract, and the two positioning portion 22 abut against each other, and the two stepped portion 225 are overlapped with each other. As a result, the clamping head 131 disengages from the contact with the avoidance groove 125 so as to allow the entire plug 20 to be inserted into the fastener 10. As a result, the components are fixed. At this time, the plug-in abutting portion 223 is inserted and abutted against the contact hole 124 of the elastic portion 122, thereby fixing the relative position between the plug 20 and the fastener 10. Moreover, after the plug 20 is fully inserted into the fastener 10, the outer walls of the two connectors 224 are abutted against the clamping portion 13, thereby further preventing deformation. As described above, it can further ensure the clamping and fixing effect of the fastening assembly.

While the disclosure has been described by way of example and in terms of exemplary embodiment, it is to be understood that the disclosures is not limited thereto. To the contrary, it is intended to lamp shade various modifications and similar arrangements (as would be apparent to those skilled in the art). Therefore, the scope of the appended claims should be accorded the broadest interpretation so as to encompass all such modifications and similar arrangements.

## Claims

1. A fastener (10), comprising:
a body (12), the body (12) comprising a connecting portion (121), two elastic portions (122) spaced apart and extending for the connecting portion (121), at least one avoidance groove (125) being provided on each of the elastic portion (122);
two clamping portions (13) respectively disposed at one end of the body (12), the two clamping portions (13) having same structure and each of the two clamping portions (13) extending from a free end of the elastic portions (122), an extension direction of the clamping portions (13) being opposite to that of a free end of the elastic portion (122) and the free end of the elastic portion (122) extending towards each other so that the connecting portion (121) of the clamping portions (13) and the elastic portions (122) are pressed against each other, each of the two clamping portions (13) comprising at least one clamping head (131) inserted into the avoidance groove (125), and an abutment head (132) provided at the free end of the clamping portions (13), the abutment head (132) extending away from the elastic portion (122), the clamping head (13) being bent towards a side of the body (12), the clamping head (131) having a wedge-shaped structure along an insertion direction of the fastener (10), the avoidance groove (10) having a trapezoidal cross-section.

2. The fastener as claimed in claim 1, wherein the connecting portion (121) has a circular cylinder or a square cylindrical.

3. The fastener as claimed in claim 1, wherein the fastener (10) further comprises a head section (11) provided another end of the body (12).

4. The fastener as claimed in claim 1, wherein the avoidance groove (125) is provided on a side of the elastic portion (122).

5. The fastener as claimed in claim 1, wherein the elastic portion (122) has two avoidance grooves (125), the two avoidance grooves (125) are respectively arranged on two sides of the elastic portion (122).

6. The fastener as claimed in claim 5, wherein an arrangement direction of the two avoidance grooves (125) is perpendicular to that of the connecting portion (121) and the elastic portion (122).

7. The fastener as claimed in claim 1, wherein the fastener (10) further comprises a head section (11) provided another end of the body (12), the head section (11) is spaced apart from the clamping head (131).

8. A fastening assembly for fixing components, comprising:
a fastener (10) as claimed in claims 1 to 7; and
a plug (20), comprising:
a pressing portion (21), and
two positioning portions (22) spaced apart and connected to the pressing portion (21), the two positioning portions (22) having same structure and each of the positioning portion (22) comprising an elastic member (221) connecting to the pressing portion (21), a positioning member (222) provided at a free end of the elastic member (221), and a plug-in abutting portion (223) provided on the elastic member (221), the positioning member (222) comprising a connector (224) for inserting into the plug hole (123), a stepped portion (225) provided on the connector (224), and a locking slot (226) provided on a free end of the connector (224), the plug-in abutting portion (223) being disposed between the connector (224) and the pressing portion (21) and the plug-in abutting portion (223) comprising an elastic connecting portion (227) connected to the elastic member (221), and a plug-in head (228) arranged on the elastic connecting portion (227),
when the two positioning portions (22) are in a free state the connector (224) being inserted into the plug hole (123), and the abutment head (132) of the clamping portions (13) abutting against the locking slot (226),
when the two positioning portion (22) abuts against each other the two stepped portion (225) being overlapped with each other and the clamping head (131) disengaging from the contact with the avoidance groove (125),
when the two positioning portion (22) abut against each other and when the plug (20) is pressed towards the free end of the elastic portion (122) the plug-in head (228) being inserted into the contact hole (124) and abut against the contact hole (124) so as to fix the plug (20) and the fastener (10).

9. The fastening assembly for fixing components as claimed in claim 8, wherein the fastener (10) comprises a head section (11) provided another end of the body (12), the plug (20) is inserted into the fastener (10) from the head section (11).

10. The fastening assembly for fixing components as claimed in claim 8, wherein the components is clamped between the head section (11) and the clamping head (131).
